# EUROPEAN PATENT APPLICATION

(11) **EP 1 130 502 A1**
(43) Date of publication of application: **05.09.2001**
(21) Application number: 00301590.6
(22) Date of filing: 29.02.2000
(51) Int. Cl.: G06F 3/023, G06F 3/033

(54) **Method and apparatus for inputting data**

(71) Applicant: Sony Service Centre (Europe) N.V., 1840 Londerzeel (BE)
(72) Inventor: Heughebaert, Andre, c/o Sony Digital Media Europe, 1130 Brussels (BE)
(74) Representative: Ayers, Martyn Lewis Stanley

(57) **Abstract**

A method and apparatus for inputting data in which individual items may be selected from a plurality of items using a device having a plurality of input keys less than the plurality of items, wherein the plurality of items are displayed as an array of groups of items and the input keys are used first to select one of the groups and then, having selected one of the groups, to select individual items within the selected group. Groups and items may have a direct correspondence with individual input keys such that actuating an input key will select the corresponding group or item. Alternatively, one of the groups or items may be highlighted and the highlighting moved between the groups or items until the desired group or item is selected.

## Description

The present invention relates to a method and apparatus for inputting data, in particular to a method and apparatus with which a relatively large number of input functions may be achieved using a small number of input keys or buttons.

Many devices have a large number of functions which are desirably controlled using a small number of keys. For instance, devices such as cellular telephones, cameras, VCRs, TVs and HIFI components all have many functions but are normally controlled using a limited set of buttons or keys. In addition, particularly for digital television using interactive services and MHEG, it may be desirable to input text and other such characters using only the normal buttons available. Similarly, it may be desirable to select other individual items from an available selection, for instance pictures from a gallery.

For input to a television device, it is known to scroll through various functions or letters of the alphabet in order to select particular functions or letters for input. Similarly, on mobile telephones, it is known to scroll through functions or a list of character strings such as telephone numbers. In addition, three characters may be assigned to each numeric key of the telephone key pad and the desired character selected by 1, 2 or 3 pushes of the key.

These previous systems are limited in the number of items, such as functions or characters, which can be selected. Scrolling through all of the items available is time consuming. Alternatively, the number of items which can be assigned to a single key is limited and by assigning several items to the same key, it is confusing as to which item is being inputted. In either case, the graphic representation of the selection of items available is limited.

According to the present invention, there is provided a method of inputting data as individual items selected from a plurality of items using a device having a plurality of input keys, the method comprising:
displaying said plurality of items as an array of groups of said items;
using said input keys to select one of the groups, and, having selected one of the groups;
using said input keys to select individual items within said selected group.

According to the present invention, there is also provided an apparatus for inputting data comprising:
a plurality of input keys for controlling the apparatus; and
a display driver for displaying a plurality of items on a display as an array of groups of items; wherein
actuation of the input keys first selects one of the groups of items and, having selected one of the groups of items, further actuation of the input keys selects an individual item within the selected group.

In this way, the user does not need to scroll through all of the displayed items, but selects the group in which the desired item is found and, having selected the group, selects the desired item. The invention is applicable to all applications, particularly software applications, with a graphical user interface and that run on a hardware platform which has no pointing device (e.g. mouse) and only a limited number of keys (e.g. a remote control with 20 keys). More precisely, it may be applied whenever the user of the application is asked to select an item out of a large set of items. It is particularly useful for inputting texts because it allows the user to select individual characters with a minimal number of keystrokes, even if he has no keyboard as input device.

Items may include characters such as letters, symbols and numbers. They may also include particular functions of the device in question or data files such as images from an image album.

The present invention allows a plurality of items greater than the plurality of input keys to be selected individually by first selecting the group in which the item is arranged.

The display driver may arrange the groups as a two dimensional array. Similarly, within each group, the display may arrange the items as a two dimensional array.

In this way, a display screen may be used efficiently. In particular, a large number of items may be displayed simultaneously and yet accessed quickly and easily by accessing the group and then the item. In contrast, previous devices use menus which are one dimensional or use a pointing device to access items directly. Such menus limit the ease of access and pointing devices are not available on most input devices such as remote control units.

The display driver may display on the display a 3 by 3 array of groups, each group containing a 3 by 3 array of items.

The input keys may comprise a 3 by 3 array of numeric keys labelled "1" to "9". This is particularly useful when each group of items corresponds to a respective input key such that actuation of an input key selects the corresponding group of items.

In this way, by actuating one of the nine numeric keys, the corresponding group of items is immediately selected.

Similarly, each item within a group may correspond to a respective input key such that, after selection of a group, actuation of an input key selects the corresponding item within the selected group.

Of course, where the input keys are arranged in a different array, the groups and items can be arranged similarly. For instance, the array may be 3 by 4 where the input keys include additionally keys for "0", "1+" and "2+".

Preferably, the array of groups corresponds in configuration to the configuration of the input keys such that actuation of one of the input keys selects the group having a corresponding position in the array of groups. Similarly, preferably the items within each group correspond in configuration to the configuration of the input keys such that, after selection of a group, actuation of one of the input keys selects the item having a corresponding position in the selected group.

This makes it clear to the user which input key to actuate in order to select a particular group or item. However, of course, the configuration of the groups and/or items on the display can be different to that of the input keys. For instance, with a 2 by 2 array of input keys, the groups could be arranged in an array of 1 by 4 or the groups could be arranged in an array of 2 by 2 with the items within each group arranged in an array of 1 by 4. In this case, the user would have to learn which input keys correspond to the positions of the groups or items on the display.

Preferably, once a group has been selected, actuation of the same input key twice in succession selects and then inputs the corresponding item. Alternatively, confirmation may be achieved by waiting for a predetermined period, for instance 1 second, after selection.

Instead of using corresponding respective input keys for each group of items, the display driver may be arranged to highlight selectively on the display any one of the groups at any one time and the apparatus arranged such that actuation of at least a first input key causes the display to change which group is highlighted and actuation of at least a second input key selects the highlighted group.

Similarly, instead of using corresponding respective input keys to select items, the display driver may be arranged to highlight selectively on the display any one of the items within the selected group at any one time and the apparatus arranged such that actuation of at least a first input key causes the display driver to change which item is highlighted and actuation of at least a second input key selects the highlighted item.

The groups may be selected by one method of selection and the items by the other method of selection. However, for ease of use, preferably the apparatus uses the same method for selecting groups as for selecting items.

Preferably, the same first input key or keys are used to change the highlighted group and highlighted item and the same second input key or keys are used for selecting the highlighted group or highlighted item.

By highlighting a group and moving the highlight between groups, it is possible to select a group and then an item quickly and easily using only a very small number of input keys. In particular, it is possible to use only one first input key and one second input key. By first selecting a group of items and then selecting an item within that group, the system is considerably quicker and easier to use than one which merely scrolls through all of the items. Nevertheless, even though the system selects the groups first, the items within those groups are visible to the user making it easier for the user to know which group to select in order to input the desired item.

Preferably, the first input key comprises four cursor or arrow keys causing the display driver to move the highlight up, down, left and right respectively.

Of course, each item may be a sub-group which itself comprises an array of items which may be selected using the input keys. In other words, the user first selects a group, then selects a sub-group within that group and finally selects an item within the sub-group. This is particularly advantageous when there is a larger number of items from which to select. Indeed, of course, the nesting of sub-groups can be taken even further.

The present invention is particularly advantageous when used in a television system with the display being the television display and the input keys being provided on the control unit of the television system, for instance, the remote control unit. The ability to select from a plurality of items and input functions or data as the items is particularly advantageous for interactive television systems, particularly MHEG, MHP (Multimedia Home Platform) and other standards for DVB (Digital Video Broadcast).

The present invention is also particularly advantageous when applied to a mobile telephone and allows a more efficient selection of functions and data, such as telephone numbers, than previous scrolling systems.

The present invention may be implemented in software for application to appropriate devices. It is particularly advantageous with layered program structures using an application program.

According to the present invention, there is also provided a method of inputting data as individual items selected from a plurality of items using a device having a plurality of input keys less than the plurality of items controlled by an application program running on layered programs, the application program:
displaying said plurality of items as an array of groups of said items;
responding to said input keys to select one of the groups , and, having selected one of the groups;
responding to said input keys to select individual items within said selected group.

In this way the invention may be implemented on any platform.

The invention will be more clearly understood from the following description, given by way of example only, with reference to the accompanying drawings in which:
Figures 1(a) illustrates a television system embodying the present invention;
Figure 1(b) illustrates a mobile telephone embodying the present invention;
Figure 2(a) illustrates a display arranged according to the present invention;
Figure 2(b) illustrates a display arranged according to the present invention;
Figures 3, 4, 5 and 6 illustrate a display arranged according to the present invention;
Figures 7, 8, 9 and 10 illustrate a display arranged according to the present invention;
Figure 11(a) illustrates an input unit for use with a first embodiment of the present invention;
Figure 11(b) illustrates an input unit for use with a second embodiment of the present invention; and
Figure 12 illustrates a layered structure in which the present invention may be embodied.

Many electronic devices such as mobile telephones, cameras, VCRs, TVs and HIFI components require the input of data or the selection of functions or data within the device. These devices are provided with integral displays or make use of an associated display, such as a television display, in order to show the available items, such as functions or data, to be input.

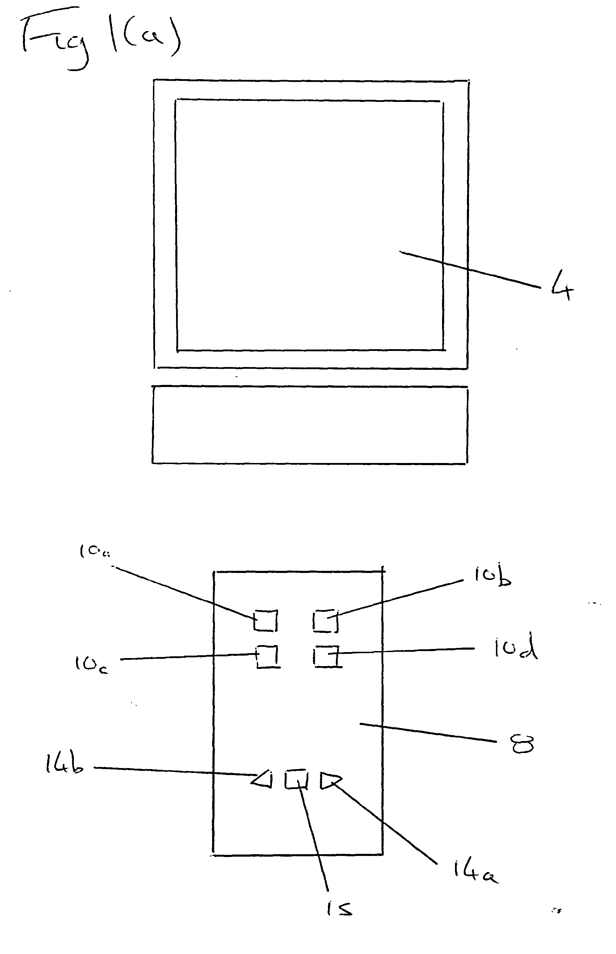

Figures 1(a) illustrates a television system with a set top box 3 including a display driver, a display 4 for displaying the items and a remote control unit 8. On the other hand, Figure 1(b) illustrates a mobile phone including the display 4. As illustrated, input keys 10, 14 and 15 are provided for controlling the devices and inputting data. These keys may be standard keys provided on the devices for other purposes.

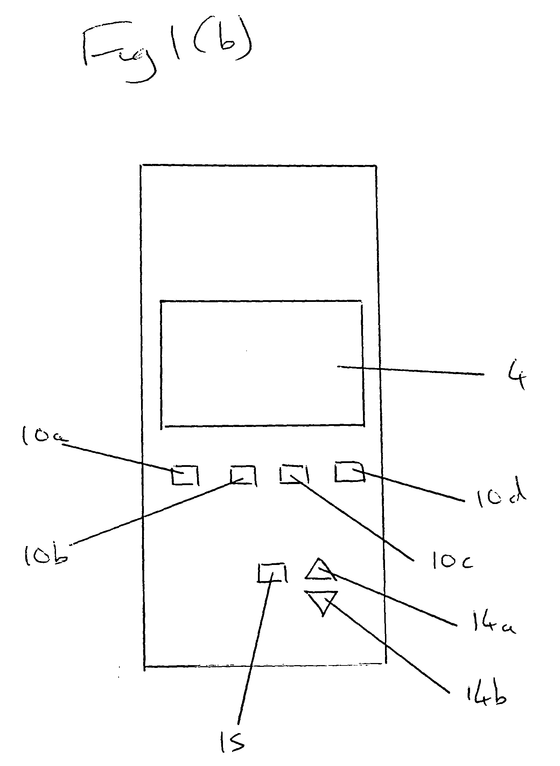

According to the present invention and as illustrated in Figures 2(a) and (b), the available items 2a to 2p are arranged on the display 4 in an array of groups 6a to 6d. Each item 2a to 2p could be a function of the device for selection by the user. Each item could also comprise data for selection by the user, for instance telephone numbers or images of an image album.

In use, the operator does not scroll through the selection of items 2a to 2p, but selects one of the groups 6a to 6d of the items 2a to 2p.

According to the example illustrated in Figure 2(a), the bottom left group 6c of items 2i, 2j, 2m and 2n is selected.

Having selected one of the groups 6a to 6d, the device then allows the user to select one of the items within the selected group.

According to the example illustrated in Figure 2(b), having selected group 6c, the top right item 2j is selected.

In this way, individual items from a large selection of items may be selected easily using only a small number of input keys by selecting the group in which the desired item is found and then the item within that group.

Of course, it is also possible to provide intermediate group levels. For example, each group 6a to 6d could be divided into a plurality of sub-groups with each sub-group comprising a plurality of individual items for selection. In this way, a user first selects a group, then selects a sub-group within that group and then finally selects the desired item from within the selected sub-group.

Of course, the total number of items may be divided in any way into groups each containing a plurality of sub-groups or items. Hence, the total display of items may be divided into two or more groups and each group may be divided into two or more sub-groups or items with there being two or more items in each sub-group or group. Similarly, the layout of the groups on the display may take any form. For instance, referring to Figure 2(a), items 2a, 2b, 2c and 2d could form a first group, items 2e, 2f, 2g and 2h a second group, items 2i, 2j, 2k, 21 a third group and items 2m, 2n, 2o and 2p a fourth group. Similarly, the items may be arranged in any way within the groups or sub-groups.

As illustrated in Figures 1(a) and (b), four input keys 10a,10b,10c and lOd are provided.

Each input key 10a to 10d corresponds to a respective group of the display 4 illustrated in Figure 2(a). Thus, before any selection is made, the input keys 10a to 10d correspond respectively to the groups 6a to 6d. By actuating one of the input keys 10a to 10d, the corresponding group 6a to 6d is selected. Thus, in the example of Figure 2(a), input key 10c has been actuated to select group 6c.

Once a group has been selected, the input keys correspond to respective items or sub-groups within the selected group. Actuation of one of the input keys 10a to 10d will therefore select the corresponding item or sub-group within the selected group. Thus, in the example of Figure 2(b), input key 10b has been actuated to select item 2j.

In a preferred embodiment, confirmation of a selected item is provided by actuating the same input key a second time.

Figures 1(a) and (b) also illustrate input keys 14a, 14b and 15.

Actuation of input keys 14a and 14b respectively scroll forwards or backwards through the groups, sub-groups or items being displayed. Thus, as illustrated in Figure 2(a) one of the groups 6a to 6d is highlighted on the display. This may be achieved by changing the colour, brightness or appearance of the group in any manner. In the example of Figure 2(a) group 6c is highlighted by the use of a particular border.

Using the keys 14a and 14b, the highlighting may be moved around all of the groups 6a to 6d and, once the desired group 6c is highlighted, input key 15 is actuated to select this group.

Once a particular group is selected, the input keys 14a and 14b may then be used to scroll through the items or sub-groups within the selected group in the same manner as described for the groups.

Thus, for the example of Figure 2(a), the input keys 14a and 14b are used to position the highlighting on item 2j. Upon actuation of input key 15, item 2j may be selected.

Of course, it is possible to provide a device with only one of the input keys 14a and 14b such that the highlighting can be scrolled in only one direction. Alternatively, four input keys could be provided to move the highlighting independently up, down, right or left.

An example will now be described in relation to inputting characters.

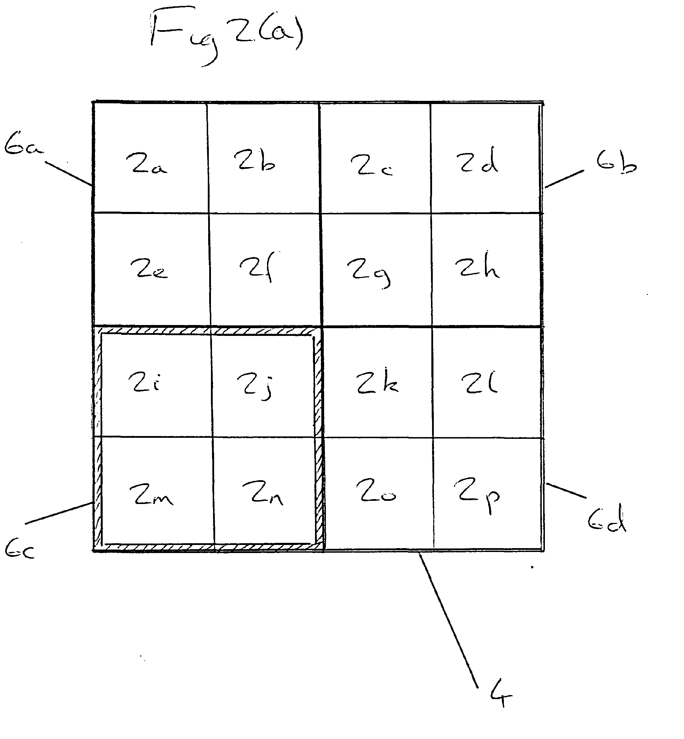

As illustrated in Figure 3, a display 20 displays 81 items comprising characters as a 3 by 3 array of groups 22a to 22i. In addition, it displays a text field 24 in which the currently inputted data is displayed.

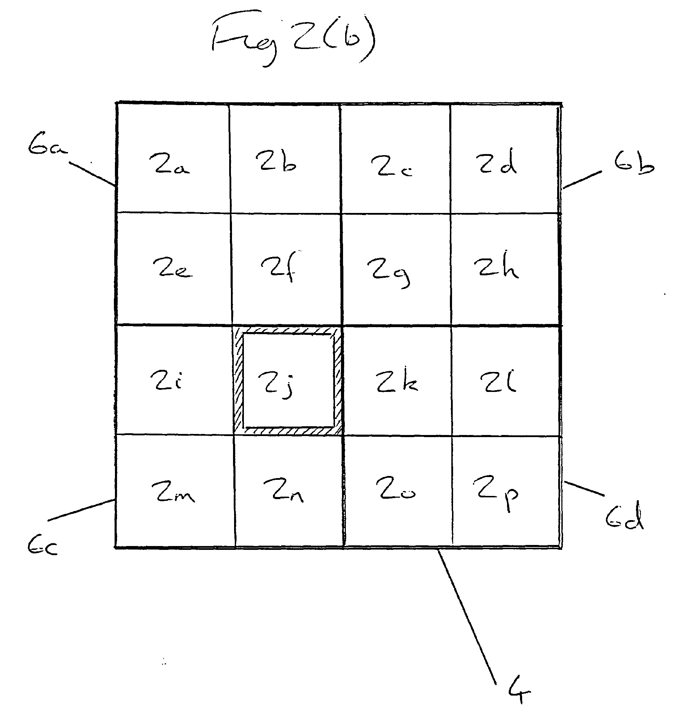

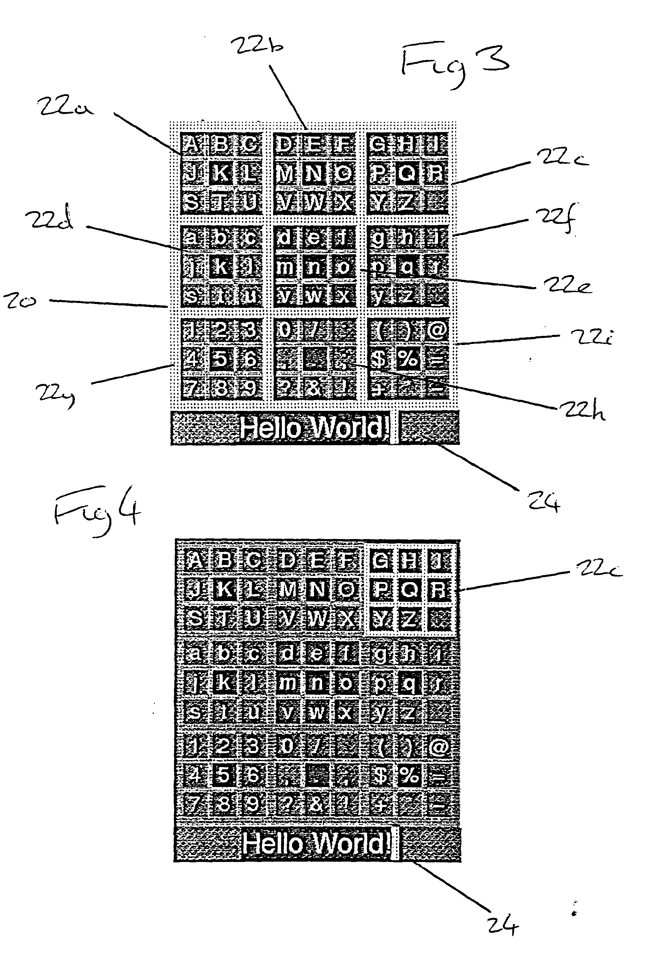

By using associated input keys, the top right group 22c may be selected as illustrated in Figure 4. Similarly, the bottom right character " " of group 22c may then be selected as illustrated in Figure 5. As a result, the selected character, i.e. a space, appears in the text field 24 as illustrated in Figure 6.

It is also possible to use this system to amend the text in the text field 24.

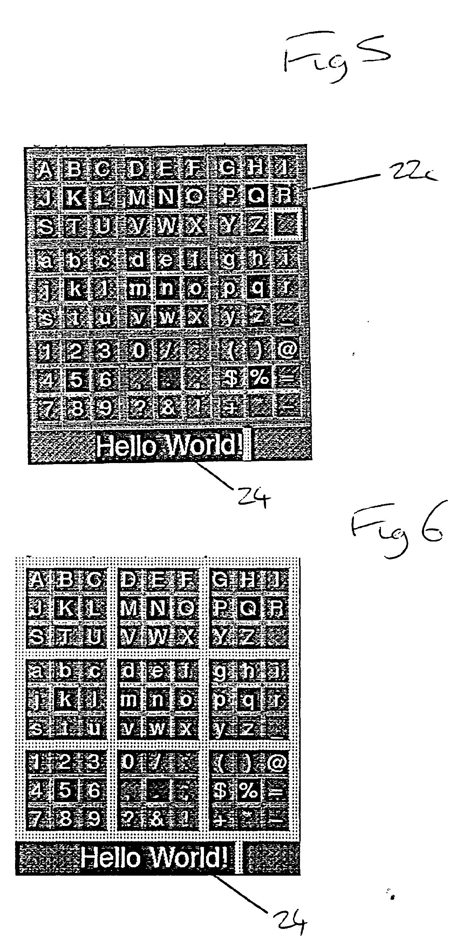

First, as illustrated in Figure 7, the user moves the cursor of the text field 24 back to the character requiring correction, in this case "!". This may be done using arrow keys, for instance input keys 14a and 14b illustrated in Figures 1(a) and (b).

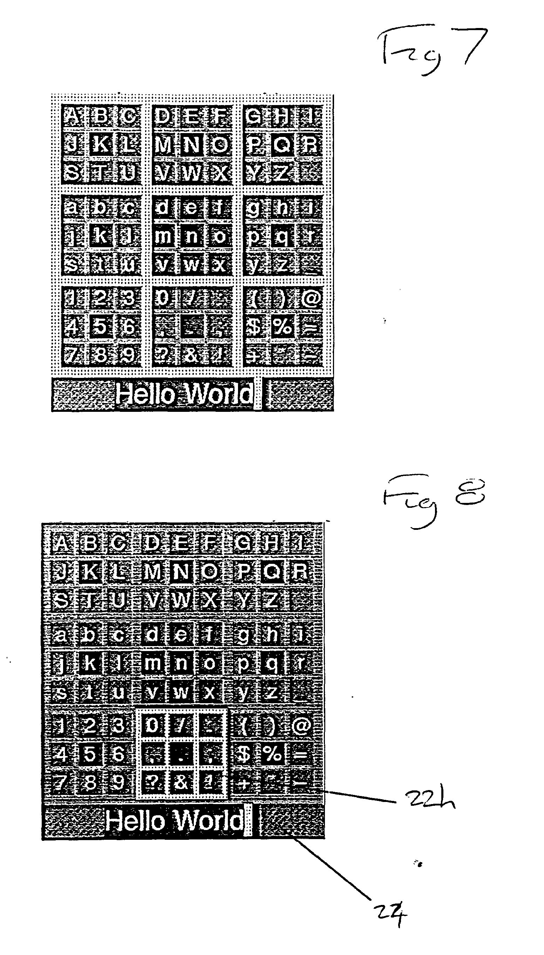

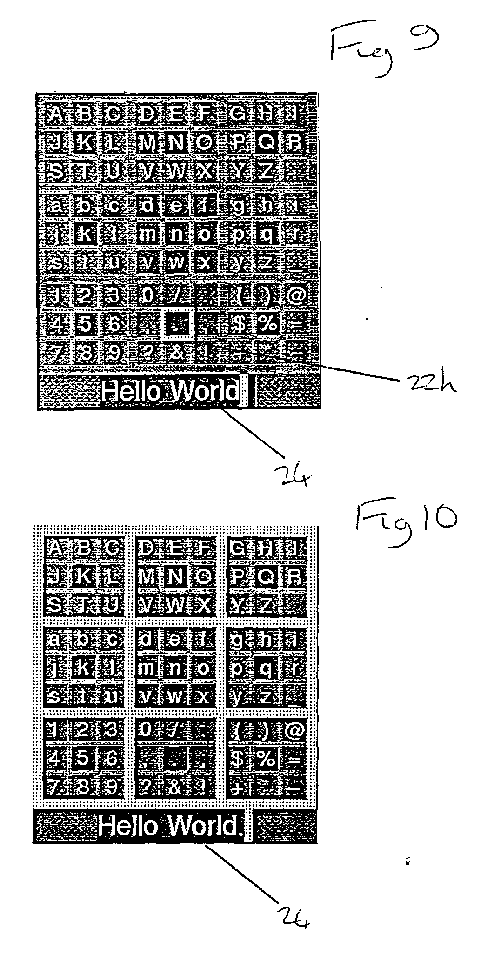

As illustrated in Figure 8, group 22h is selected. Having selected this group, as illustrated in Figure 9, "." is selected within group 22h such that, as illustrated in Figure 10, "." is inserted in the text field 24 to replace "!".

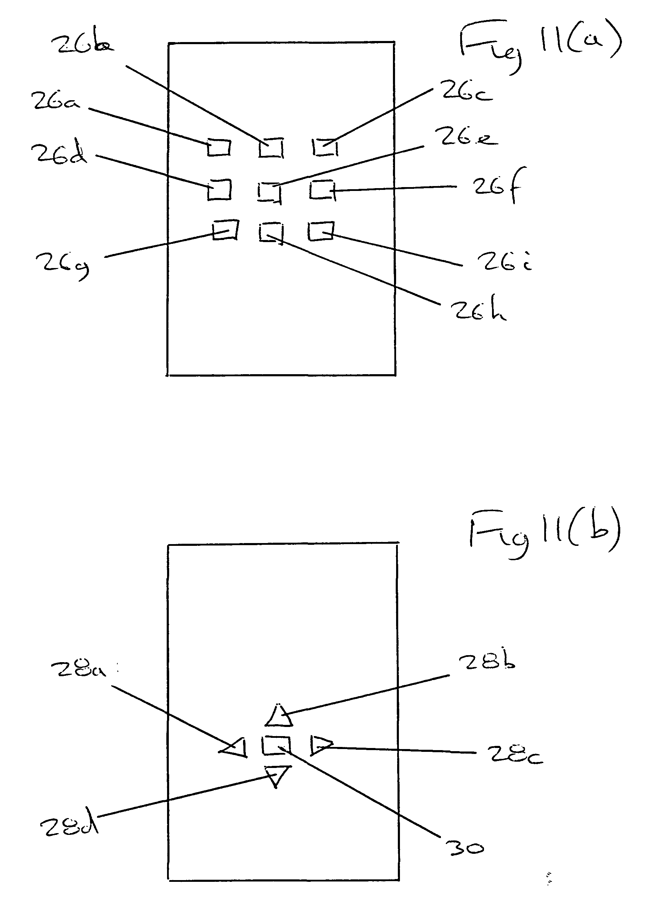

Figure 11(a) illustrates a device having input keys 26a to 26i. Hence, the array of groups 22a to 22i on the display 20 and the array of characters within each group is provided in an array corresponding to the array of input keys. In this way, input key 26c is actuated to select group 22c as illustrated in Figure 4 and then input key 26i is actuated to select the space character illustrated in Figure 5. Preferably, the input key 26i is actuated a second time in order to input the selected character as illustrated in Figure 6.

On the other hand, Figure 11(b) illustrates a device having input keys 28a to 28d for moving highlighting around the display 20 and input key 30 for selecting a highlighted region.

Thus, having actuated input key 30, only one of the groups 22a to 22i of Figure 3 is highlighted. Input keys 28a to 28d are then used respectively to move the highlighting left, up, right and down such that group 22c is highlighted as illustrated in Figure 4. By depressing input key 30 group 22c is selected and then the input keys 28a to 28d may be used to move the highlighting around the characters within group 22c so as to select the space character as illustrated in Figure 5. By depressing the input key 30, the space character is inputted and displayed in the text field 24 as illustrated in Figure 6.

Similarly, having used input key 28a to back space onto the "!" character, input key 30 causes the display to highlight one of the groups 22a to 22i such that input keys 28a to 28d may move the highlighting to group 22h as illustrated in Figure 8. Having selected group 22h using input key 30, input keys 28a to 28d may then be used to move the highlighting around the characters within group 22h.

Preferably, after a group is selected by actuating input key 30, the central character of that group is highlighted by default. Thus, when the display appears as in Figure 9, the "." character may be inputted by actuating input key 30 such that it appears in the text field 24 as illustrated in Figure 10.

The present invention is ideally suited for implementation on a television system having a remote control device. In particular, it can be used to control the functions of various television devices and to use interactive functions of television devices, for instance by means of MHEG, MHP and other standards for DVB.

Many input devices such as remote control units or telephones include numeric keys numbered "1" to "9". Hence, these keys may be used to select corresponding groups on the display and then corresponding sub-groups or items within the groups or sub-groups. This is particularly advantageous when the numeric keys have an arrangement such as input keys 26a to 26i of Figure 11(a), i.e. laid out in a matrix of 3 by 3, such that the groups and items may be arranged on the display as illustrated in Figure 3.

In general, the topology of the displayed items preferably corresponds to the topology of the available keys or a subset thereof. This topology may be any array, such as the digits of a key pad described above, or may be quite different, such as 6 keys equally spread on a circle.

Many input devices also have cursor keys for moving a selection and select keys for making a selection. By making use of these keys as described above, individual items of a large number of items may easily and quickly be selected.

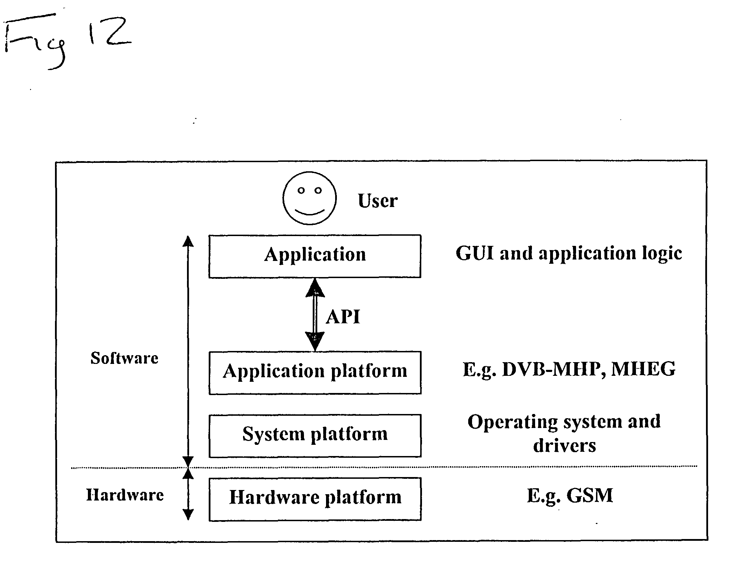

Figure 12 shows a layered structure as it can be found in most hardware-software systems. The present invention may be implemented on this structure as discussed below.

In Figure 12, the hardware platform consists at least of a processor and its memory, a user input device and a display device. In accordance with the description above, examples of such a hardware platform are a GSM or a digital TV set, operated by a remote control.

The system platform consists of the operating system and drivers. Amongst other things, these drivers are necessary to operate the input and display devices.

The application platform is all the software that extends the basic features of the system platform to allow an application to run on the system. In the case of a digital TV set, this may be the software stack that implements the DVB-MHP standard (Digital Video Broadcast - Multimedia Home Platform) or the MHEG standard, but it may as well be a proprietary software stack. The application platform exposes an API (Application Program Interface) to be used by the application to access all the features of the system and by the application platform to notify user interaction i.e. actuation of keys to the application.

Finally, the application is composed of application logic and a GUI (graphical user interface).

The implementation of the invention is part of the application. Such an implementation relies on the API (application program interface) that is exposed by the underlying layers. This API depends on the application domain (e.g. DVB-MHP is such an API defined for digital receivers - set-top boxes). The invention can be implemented on any such platform, as long as the hardware platform contains at least a display unit and a user input device. This GUI in the application is used by the application to display to the user the different items, the user input focus and the selected item(s). In other words, by using this layered structure, the invention may be implemented on any platform and arranged according to the input keys available. It may be available in any suitable software form and loaded on to the platform as necessary.

## Claims

1. An apparatus for inputting data comprising:
a plurality of input keys (10, 14, 15) for controlling the apparatus; and
a display driver (3) for displaying on a display (4) a plurality of items (2) greater than the plurality of input keys (10, 14, 15) as an array of groups (6) of items (2); wherein
actuation of the input keys (10, 14, 15) first selects one of the groups (6) of items (2) and, having selected one of the groups (6) of items (2), further actuation of the input keys (10, 14, 15) selects an individual item (2) within the selected group (6).

2. An apparatus according to claim 1 wherein the display driver (3) arranges the groups (6) as a two-dimensional array and, within each group (6), arranges the items (2) as a two dimensional array.

3. An apparatus according to claim 2 wherein the display driver (3) displays on the display (4) a 3 by 3 array of the groups (6) and a 3 by 3 array of items (2) within each group.

4. An apparatus according to claim 1, 2 or 3 wherein each group (6) of items (2) corresponds to a respective input key (10) such that actuation of an input key (10) selects the corresponding group (6) of items (2).

5. An apparatus according to claim 4 wherein each item (2) within a group (6) corresponds to a respective input key (10) such that, after selection of a group (6), actuation of an input key (10) selects the corresponding item (2) within the selected group (6).

6. An apparatus according to any preceding claim wherein the array of groups (6) corresponds in configuration to the configuration of the input keys (10) such that actuation of one of the input keys (10) selects the group (6) having a corresponding position in the array of groups (6).

7. An apparatus according to claim 6 wherein the items (2) within each group (6) correspond in configuration to the configuration of the input keys (10) such that, after selection of a group (6), actuation of one of the input keys (10) selects the item (2) having a corresponding position in the selected group (6).

8. An apparatus according to claim 5 or 7 wherein actuation of the same input key (10) twice in succession selects and then inputs the corresponding item (2).

9. An apparatus according to any preceding claim wherein the input keys (10) comprise 9 input keys labelled "1" to "9".

10. An apparatus according to any preceding claim, wherein:
the display driver (3) is arranged to highlight selectively on the display (4) any one of the groups (6) at any one time;
actuation of at least a first input key (14a, 14b) causes the display driver (3) to change which group (6) is highlighted; and
actuation of at least a second input key (15) selects the highlighted group (6).

11. An apparatus according to any preceding claim wherein, having selected one of the groups (6) of items (2),
the display driver (3) is arranged to highlight selectively on the display (4) any one of the items (2) within the selected group (6) at any one time;
actuation of at least a first input key (14a, 14b) causes the display driver (3) to change which item is highlighted; and
actuation of at least a second input key (15) selects the highlighted item.

12. An apparatus according to claim 10 or 11 wherein said at least a first input key (14) comprises four cursor keys for causing the display (4) to move the highlight up, down, left and right respectively.

13. An apparatus according to any preceding claim wherein each item (2) is a sub-group which itself comprises an array of items which may be selected using the input keys.

14. An apparatus according to any preceding claim wherein each item (2) comprises one of a symbol, a character, a character string and an image.

15. A television system comprising the apparatus of any preceding claim wherein the input keys are provided on a remote control unit (8).

16. A television system according to claim 15 for receiving digital television and including interactive capabilities for which the items may be input.

17. A television system according to claim 15 or 16 which is DVB compliant.

18. A television system according to claim 15, 16 or 17 which is MHEG and/or MHP compliant.

19. A mobile telephone (12) comprising the apparatus of any one of claims 1 to 14 wherein the display (4) is integral with the mobile phone (12) and the input keys (10, 14, 15) are keys of a key pad.

20. A method of inputting data as individual items selected from a plurality of items (2) using a device having a plurality of input keys (10, 14, 15) less than the plurality of items (2), the method comprising:
displaying said plurality of items (2) as an array of groups (6) of said items;
using said input keys (10, 14, 15) to select one of the groups (6), and, having selected one of the groups (6);
using said input keys (10, 14, 15) to select individual items (2) within said selected group (6).

21. A method according to claim 20 wherein each group (6) of items (2) corresponds to a respective input key (10) such that actuation of an input key (10) selects the corresponding group (6) of items (2).

22. A method according to claim 21 wherein each item (2) within a group (6) corresponds to a respective input key (10) such that, after selection of a group (6), actuation of an input key (10) selects the corresponding item (2) within the selected group (6).

23. A method according to any claim 20, 21 and 22 wherein the array of groups (6) is arranged to correspond in configuration to the configuration of the input keys (10) such that actuation of one of the input keys (10) selects the group (6) having a corresponding position in the array of groups (6).

24. A method according to claim 23 wherein the items (2) within each group (6) is arranged to correspond in configuration to the configuration of the input keys (10) such that, after selection of a group (6), actuation of one of the input keys (10) selects the item (2) having a corresponding position in the selected group (6).

25. A method according to claim 22 or 24 wherein actuation of the same input key (10) twice in succession selects and then inputs the corresponding item (2).

26. A method according to any one of claims 20 to 25, comprising:
selectively highlighting any one of the groups (6) at any one time;
using at least a first input key (14a, 14b) to change which group (6) is highlighted; and
using at least a second input key (15) to select the highlighted group (6).

27. A method according to any one of claims 1 to 26 wherein, having selected one of the groups (6) of items (2), the method comprises:
selectively highlighting any one of the items (2) within the selected group (6) at any one time;
using at least a first input key (14a, 14b) to change which item is highlighted; and
using at least a second input key (15) to select the highlighted item.

28. A computer readable storage medium having recorded thereon code components that, when executed on a computer and executed will cause that computer to operate according to any one of claims 20 to 27.

29. A computer readable storage medium having recorded thereon code components to form an application program that, when executed on a platform with layered programs and executed, will cause that platform to operate according to any one of claims 20 to 27.

30. A method of inputting data as individual items selected from a plurality of items (2) using a device having a plurality of input keys (10, 14, 15) less than the plurality of items (2) controlled by an application program running on layered programs, the application program:
displaying said plurality of items (2) as an array of groups (6) of said items;
responding to said input keys (10, 14, 15) to select one of the groups (6), and, having selected one of the groups (6);
responding to said input keys (10, 14, 15) to select individual items (2) within said selected group (6).
